Europäisches Patentamt

(19) European Patent Office

Office européen des brevets

(11) Numéro de publication: **0 213 025**
**B1**

(12) **FASCICULE DE BREVET EUROPEEN**

(45) Date de publication du fascicule du brevet:
08.11.89

(51) Int. Cl.⁴: **G 01 N 9/36**

(21) Numéro de dépôt: **86401684.5**

(22) Date de dépôt: **28.07.86**

(54) **Procédé et dispositif pour la mesure de la teneur en eau d'une atmosphère gazeuse, en particulier émanant d'enceintes de séchage ou de fours de cuisson.**

(30) Priorité: **01.08.85 FR 8511787**

(43) Date de publication de la demande:
**04.03.87 Bulletin 87/10**

(45) Mention de la délivrance du brevet:
**08.11.89 Bulletin 89/45**

(84) Etats contractants désignés:
**AT BE CH DE FR GB IT LI LU NL SE**

(56) Documents cités:
**FR-A- 1 384 830**
**US-A- 3 648 512**
**US-A- 3 672 388**

(73) Titulaire: **GAZ DE FRANCE, 23, rue Philibert Delorme, F-75017 Paris (FR)**

(72) Inventeur: **Marchand, Bernard, 40, Rue Duhesme, F-75018 Paris (FR)**

(74) Mandataire: **Lerner, François, 5, rue Jules Lefèbvre, F-75009 Paris (FR)**

ACTORUM AG

## Description

L'invention a pour objet un procédé et un dispositif pour la mesure de la teneur en eau d'une atmosphère gazeuse, en particulier émanant d'enceintes de séchage ou de fours de cuisson.

Dans les installations industrielles, les teneurs en eau sont souvent très importantes, parfois jusqu'à une dizaine de kilogrammes d'eau par kilogramme d'air sec. Les mesures à effectuer pour déterminer cette valeur de la teneur en eau, sont d'autant plus délicates, que les fluides sont le plus souvent chargés, soit de particules en suspension, soit de composés chimiques issus de la combustion ou de la cuisson.

Pour pallier ces difficultés et remplir ces conditions, on a proposé dans la technique divers procédés et appareils. Les méthodes psychométriques, dans lesquelles on calcule les teneurs en eau à partir de la connaissance des températures sèches et humides, et celles dans lesquelles on calcule la mesure des points de rosée, sont, du fait de la valeur élevée de ces teneurs, d'un emploi très délicat. En effet, les températures humides et de point de rosée sont toutes deux proches de 100°C. Les précisions que l'on peut espérer par ces deux méthodes sont donc insuffisantes.

Les méthodes basées sur la mesure des condensats dans un piège refroidi, sont fiables et ne nécessitent aucun étalonnage. Cependant leur mise en œuvre est délicate surtout en milieu industriel. En outre, le principe d'une mesure par échantillonnage sur une période de temps relativement longue, ne permet pas des mesures instantanées. La nature discontinue de ces relevés peut être gênante notamment, pour l'utilisation de l'appareil de mesure comme capteur de régulation.

L'invention a pour objet d'éviter les inconvénients sus-mentionnés.

Le procédé, conforme à l'invention, pour la mesure de la valeur de la teneur en eau d'une atmosphère gazeuse, en particulier émanant d'enceintes de séchage ou de fours de cuisson, se caractérise en ce que:

— on mesure la masse volumique ($\ell_M$) du mélange humide, en phase gazeuse, fournie par un capteur du type densimètre,

— on calcule le titre molaire ($Y_{eau}$) en vapeur d'eau du mélange gazeux par la formule:

$$Y_{eau} = \frac{K - \ell_M}{(K - \ell_M) - \dfrac{M_{eau}}{\ell_{eau}} \dfrac{P}{RT} (\ell_{eau} - \ell_M)}$$

dans laquelle

K est un paramètre,

$M_{eau}$ est la masse molaire de la vapeur d'eau et $\ell_{eau}$ la masse volumique, à la pression P et à la température T, de la vapeur d'eau,

R est la constante des gaz parfaits;

— et on en déduit la valeur du rapport de mélange (r) par une relation numérique donnée.

Le procédé, utilisé sur un dispositif conforme à l'invention, permet d'obtenir une précision meilleure que ou égale à 3% depuis 10 g d'eau/kg d'air sec jusqu'à des teneurs supérieures à 10 kg d'eau/kg d'air sec. Cependant, il est entendu que cette précision dépend directement de la précision obtenue sur la mesure de la masse volumique. Par comparaison, la précision des psychromètres haute teneur de la technique, est de l'ordre de quelques pour cent pour une teneur en eau maximale de l'ordre de 800 g/kg d'air sec.

En outre, il est à noter que la mesure de la masse volumique d'une atmosphère gazeuse est un moyen dont la mise en œuvre est aisé et souple. D'ailleurs, cette méthode peut être utilisée aussi bien pour des mesures ponctuelles sur site, que comme principe d'une capteur de régulation.

L'invention s'applique également à un dispositif pour la mise en œuvre du procédé de mesure de la teneur en eau d'une atmosphère gazeuse, comprenant une chaîne d'acquisition de la valeur recherchée qui comporte un capteur du type densimètre, relié à un conduit d'admission thermostaté du mélange humide gazeux et à un conduit d'évacuation dudit mélange, auquel est couplée une unité de calcul de ladite valeur recherchée à partir, au moins, de la mesure de la masse volumique humide dudit mélange fourni par ledit densimètre.

L'invention et sa mise en œuvre apparaîtront plus clairement dans la description qui va suivre faite en référence aux dessins dans lesquels:

— la figure 1 présente un dispositif conforme à l'invention comportant une chaîne d'acquisition de la valeur de la teneur en eau, pouvant être utilisée notamment dans une chaîne de régulation,

— la figure 2 montre un dispositif selon l'invention comportant deux chaînes d'acquisition disposées en parallèle, permettant la mesure continue de la valeur de la teneur en eau du mélange gazeux,

— la figure 3 présente un dispositif conforme à l'invention comportant une chaîne d'acquisition permettant le calcul discontinu de la valeur de la teneur en eau du mélange gazeux,

— la figure 4 montre une courbe présentant la précision relative $\dfrac{\Delta r}{r}$ de la teneur en eau (en pourcentage) en fonction du rapport de mélange (r).

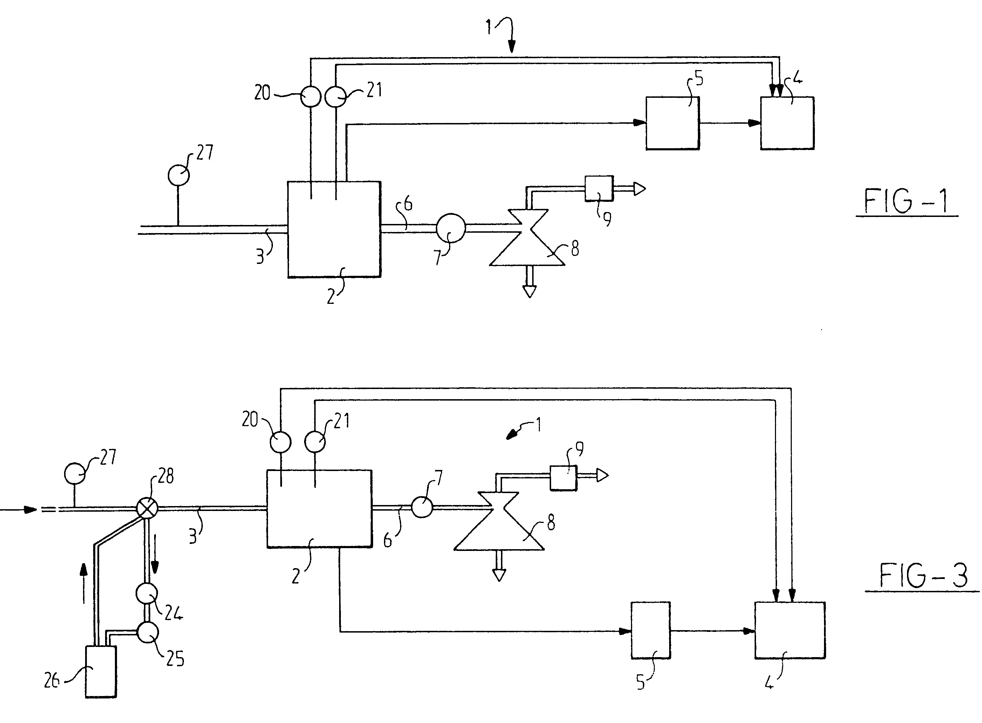

En se référant, tout d'abord, à la figure 1, on voit la chaîne d'acquisition, repérée dans son ensemble 1, qui permet de mesurer la valeur de la teneur en eau du mélange gazeux. L'atmosphère gazeuse dont la teneur en eau est à mesurer est prélevée, par exemple, par aspiration et est conduite à l'intérieur du tube d'admission 3 jusqu'à capteur 2, du type densimètre. L'atmosphère gazeuse est maintenue à une température constante supérieure à 100°C par le régulateur de température 27. Le débit dans le capteur 2 est obtenu, dans l'exemple illustré, par l'intermédiaire d'un éjecteur 8 mû par de l'air comprimé, et réglé par un détenteur régulateur 9. En outre, le débit du fluide à mesurer dans le tube d'évacuation 6 est contrôlé par un appareil 7 de mesure de débit.

Dans le cas illustré, le capteur 2 fait office d'appareil de mesure de la masse volumique de l'air humide, c'est-à-dire chargé en vapeur d'eau, qui circule dans les conduits 3, 6. A cet effet, le capteur 2 est relié à un conditionneur 5. Le fonctionnement du capteur 2 est basé sur la technique, connue en soi, du tube vibrant, dans laquelle à partir de la fréquence de resonnance propre du tube dans lequel circule le fluide à mesurer, on établit le calcul de la masse volumique de celui-ci, le conditionneur 5 assure le maintien de cette fréquence.

En se référant toujours à la figure 1, on note qu'un capteur de température 20 et un capteur de pression 21 assurent la régulation et la mesure de température ainsi que la mesure de pression à intérieur du capteur 2 et fournissent éventuellement ces informations à une unité de calcul 4. A la sortie du conditionneur 5 le signal correspondant à la masse volumique du mélange gazeux humide est traité dans l'unité de calcul 4 qui permet de déterminer, à partir de la mesure de la masse volumique du mélange humide fourni par le densimètre 2, la valeur du titre puis la valeur recherchée du rapport de mélange r, qui est la formulation habituellement utilisée pour exprimer la teneur en eau d'une atmosphère.

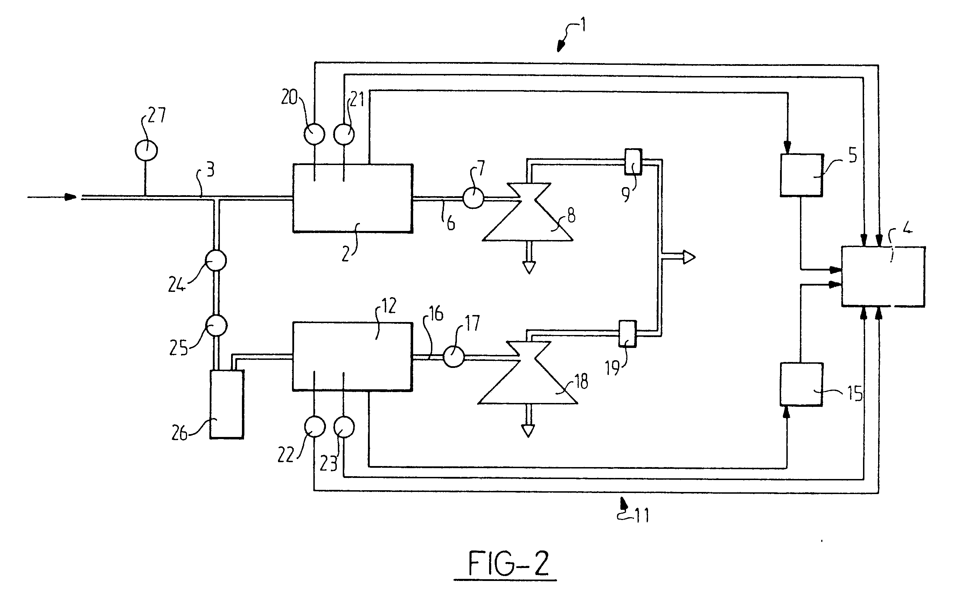

En se reportant maintenant à la figure 2, on note que celle-ci présente deux chaînes d'acquisition 1, 11, disposées en parallèle et reliées d'une part au conduit d'admission commun 3 du mélange gazeux, et d'autre part, à l'unité de calcul 4, qui reçoit les signaux correspondant à la mesure des masses volumiques humides et sèches du mélange gazeux fourni par chacun des deux capteurs 2, 12. Une partie du mélange gazeux humide, circulant dans le tube d'admission 3, est déviée et passe successivement dans un condenseur 24, dans un séparateur gaz-liquide 25 et enfin dans un absorbeur 26. Ces trois appareils, de type connu, assurent le séchage du mélange gazeux humide, et permettent d'obtenir un mélange gazeux sec, c'est-à-dire sensiblement dépourvu de vapeur d'eau. A la sotie de ce cycle de séchage, le mélange gazeux sec circule dans le capteur de type densimètre 12 (identique au capteur 2) dans lequel la mesure de sa masse volumique va être effectuée, en collaboration avec le conditionneur 15 (identique au conditionneur 5). De même que précédemment, la circulation du mélange gazeux sec va être réalisée par aspiration et évacuation, dans le tube 16, grâce à l'éjecteur 18 mû par de l'air comprimé et réglé par un détenteur 19. Le débit gazeux est, en outre, contrôlé par un appareil 17 de mesure de débit.

Sur le capteur 12 sont disposés un capteur de pression 23 et un capteur régulateur de température 22 reliés à l'unité de calcul 4. A l'unité de calcul 4 est également relié le conditionneur 15 à laquelle il fournit des informations.

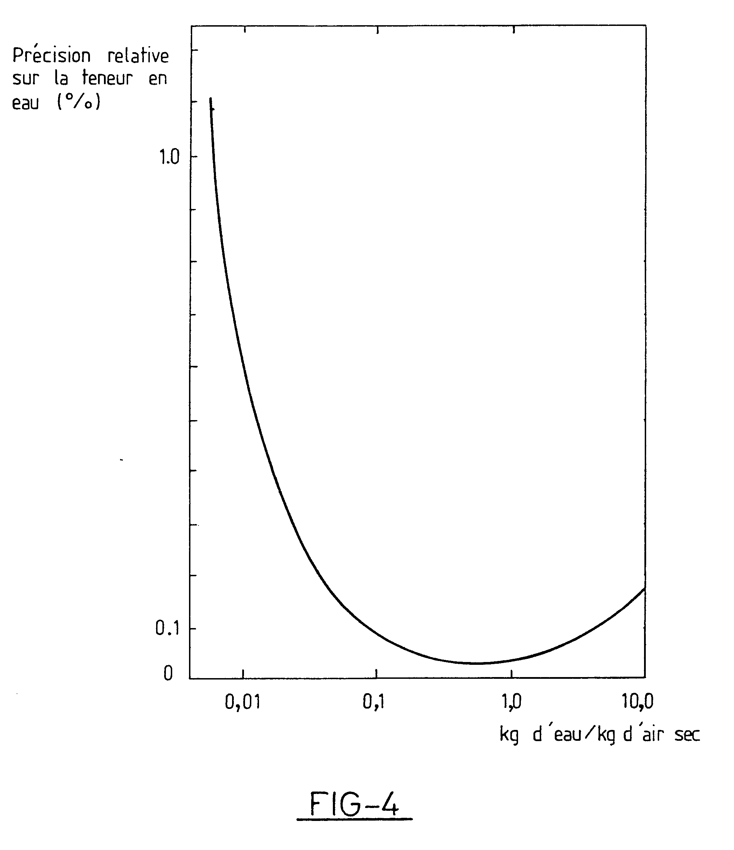

En se référant maintenant à la figure 3 on note que sur le conduit 3 d'admission du mélange gazeux humide est disposé une commande 28 séquentielle. Cette commande 28, par exemple du type vanne trois voies, permet l'admission, dans le capteur 2, soit directement du mélange gazeux humide, soit du mélange gazeux sec, après passage dans le cycle de séchage, c'est-à-dire successivement dans un condenseur 24, dans un séparateur gaz-liquide 25 et dans un absorbeur 26.

De même que dans les exemples précédents, la température du tube d'admission 3 est contrôlée à l'aide du régulateur 27 qui assure une température sensiblement constante supérieure à 100°C.

De la même manière, après passage dans le capteur 2, le mélange gazeux, alternativement sec et humide est évacué dans le tube 6 par aspiration grâce à l'éjecteur 8 mû par de l'air comprimé, et réglé par le détendeur régulateur 9. Le débit du mélange est contrôlé par un appareil 7 de mesure de débit.

On note aussi, que les deux capteurs 20, 21 respectivement de température et de pression assurent la régulation du densimètre 2 et transmettent éventuellement leurs informations à l'unité de calcul 4. En outre, le conditionneur 5 est relié à l'unité de calcul 4.

On va maintenant décrire le fonctionnement du dispositif dans les différentes variantes conformes à l'invention et présentées ci-dessus.

Tout d'abord, on notera qu'aux figures 1, 2 et 3 on a représenté par un double trait le cheminement du mélange gazeux, sec ou humide et par un simple trait le cheminement des informations issues du capteur 2.

La figure 1 présente une chaîne d'acquisition 1 permettant au dispositif, conforme à l'invention, de fonctionner comme une chaîne de régulation de la teneur en eau d'une enceinte.

Pour cela, le mélange gazeux humide, par exemple, mélange d'air, de produits de combustion et de vapeur d'eau, issus de l'enceinte dans laquelle la mesure de la teneur en eau est à effectuer, circule dans la tube d'admission 3 dans lequel sa température est maintenue sensiblement constante et préférentiellement de l'ordre de 110°C. Lors du passage du mélange gazeux humide dans le capteur 2, celui-ci mesure, en coopération avec le conditionneur 5, la masse volumique de mélange humide ($\ell_M$), ce qui permet d'accéder à la valeur du titre molaire ($Y_{eau}$) en vapeur d'eau et par suite au rapport de mélange r, qui est la formulation habituellement utilisée pour exprimer la teneur en eau d'une atmosphère.

Afin d'éviter des problèmes de condensation, le capteur de température 20 maintient une température T, de l'ordre de 110°C. Un capteur de pression 21 sert à mesurer la pression P afin de permettre, éventuellement, d'effectuer des corrections sur la(les) mesure(s) de masse(s) volumique(s). Cette caractéristique est aussi réalisée dans les procédés d'utilisation des dispositifs présentés aux figures 2 et 3. Dans l'applications représentée à titre d'exemple non limitatif, le calcul précis d'une masse volumique est basé sur la technique du tube vibrant, en soi connue, dans laquelle la mesure de la fréquence de résonnance propre d'un fluide, permet de calculer la masse volumique. Le conditionneur 5 entretient d'ailleurs le tube en vibration sur ladite fréquence.

A la sortie du capteur, le débit de fluide est mesuré par un appareil 7, 17. Il est à noter que le débit n'a pas d'influence sur les capteurs, du type densimètre, 2, 12, reliés respectivement, aux conditionneurs 5, 15.

Le débit n'agit que sur le temps de réponse de l'appareil et pas sur la mesure de la masse volumique.

L'appareil de mesure 7, 17 permet donc de contrôler l'existence du débit et d'assurer indirectement un temps de réponse minimal, compte-tenu des caractéristiques des capteurs 2, 12 et des dimensions du tube de prélèvement 3.

La mesure de la masse volumique ($\ell_M$) du mélange gazeux humide ayant été effectuée, on procède au calcul du titre molaire ($Y_{eau}$) en vapeur d'eau du mélange gazeux grâce à la formule:

$$Y_{eau} = \frac{K - \ell_M}{(K - \ell_M) - \dfrac{M_{eau}}{\ell_{eau}}(\ell_{eau} - \ell_M)\dfrac{P}{RT}}$$

dans laquelle:

K est un paramètre,

$M_{eau}$ est la masse molaire de la vapeur d'eau, et $\ell_{eau}$ la masse volumique de la vapeur d'eau à la pression P et à la température T.

On notera que:

$$\frac{RT}{P} = \frac{M_{air}}{\ell_{air}}$$

formule dans laquelle $M_{air}$ et $\ell_{air}$ sont respectivement la masse volumique du mélange gazeux sec.

Cette relation, dans laquelle on considère que le mélange gazeux sec peut être assimilé à un mélange de gaz parfait, est utilisée pour transformer la formule du titre molaire en vapeur d'eau du mélange:

$$Y_{eau} = \frac{K - \ell_M}{(K - \ell_M) - \dfrac{M_{eau}}{M_{air}}(\ell_{eau} - \ell_M)\dfrac{K}{\ell_{eau}}}$$

(avec K = $\ell_{air}$), sous la forme:

$$Y_{eau} = \frac{K - \ell_M}{(K - \ell_M) - \dfrac{M_{eau}}{\ell_{eau}}\dfrac{P}{RT}(\ell_{eau} - \ell_M)}$$

Dans le cas où le dispositif conforme à l'invention fonctionne en régulation de l'humidité d'une enceinte, on choisit comme valeur du paramètre K une constante numérique égale à la masse volumique du mélange sec, cest-à-dire sensiblement dépourvue de vapeur d'eau. Cette constante peut être déterminée lors de l'étalonnage du capteur.

Enfin, du calcul du titre molaire ($Y_{eau}$), on déduit, grâce à l'unité de calcul 4, la valeur du rapport de mélange (r) par la relation numérique suivante:

$$r = \frac{Y_{eau}}{1 - Y_{eau}}\frac{M_{eau}}{M_{air}}$$

la précision sur la teneur est donc, en première approximation:

$$\frac{\Delta r}{r} = \Delta Y \cdot \frac{(\delta + r)^2}{\delta \cdot r} \quad \text{avec } \delta = \frac{M_{eau}}{M_{air}}$$

et: $$\Delta Y = \frac{\Delta \ell_M}{|K - \ell_{eau}|} + \frac{|\ell_M - \ell_{eau}|}{(K - \ell_{eau})^2}\Delta K$$

En supposant pour l'appareil de mesure de masse volumique une précision $\Delta \ell_M$ égale à $\Delta K$ et de l'ordre d'environ $10^{-4}$ kg/m³ pour une gamme allant environ de 0,5 à 1 kg/m³ à 110°C, la précision relative $\dfrac{\Delta r}{r}$ est donnée par la figure 4.

Cette précision meilleure que 3% pour une teneur en eau allant de 10 g/kg d'air sec jusqu'à 10 kg/kg d'air sec, est du même ordre de grandeur que celle obtenue avec un psychromètre haute teneur, pour des teneurs en eau faibles (erreur absolue égale à environ 0,3 g/kg d'air sec pour des teneurs en eau allant sensiblement de 1 g à 50 g d'eau/kg d'air sec).

Cependant la précision est meilleure que celle d'un psychromètre vers les hautes teneurs en eau, y compris jusqu'à plus de 10 kg d'eau/kg d'air sec. Ladite précision dépendant, cependant, directement de la précision obtenue sur la mesure de la masse volumique.

Si l'on désire obtenir une mesure précise de la teneur en eau, on utilisera préférentiellement le dispositif conforme à l'invention présenté à la figure 2. Ce dispositif utilise deux chaînes d'acquisition 1, 11, disposées en parallèle.

La chaîne d'acquisition 1 fonctionne selon le procédé décrit précédemment.

La chaîne d'acquisition 11 va permettre de calculer la masse volumique du mélange gazeux sec, c'est-à-dire sensiblement dépourvu de vapeur d'eau. Pour cela, avant de pénétrer dans le capteur du type densimètre 12 permettant, en collaboration avec le conditionneur 15, de calculer ladite masse volumique, le mélange gazeux humide circulant, à une température de l'ordre de 110°C, dans le tube 3 va être séché successivement dans le condenseur 24, le séparateur gaz-liquide 25 et l'absorbeur 26. Lors du passage du mélange gazeux sec dans le capteur 12, on va mesurer la masse volumique ($\ell_{air}$) du mélange sec de la même manière que dans le procédé utilisé dans le dispositif décrit à la figure 1.

En se référant à la formule permettant le calcul du titre molaire ($Y_{eau}$) présenté précédemment, on note que le paramètre K est maintenant choisi comme une variable numérique, égale à la masse volumique ($\ell_{air}$) du mélange sec.

En conséquence, l'unité de calcul 4 intègre pour le calcul de la valeur du rapport de mélange (r) la mesure de la masse volumique ($\ell_M$) du mélange gazeux humide et la mesure de la masse volumique ($\ell_{air}$) du mélange gazeux sec. Une correction éventuelle peut être effectuée en tenant compte des pressions et températures P et T, régnant dans chacun des densimètres 2, 12 et fournies par les capteurs 20, 21, 22 et 23.

Le procédé qui vient d'être décrit permet un calcul continu des masses volumiques des mélanges humides et secs, du titre molaire, et de la teneur en eau du mélange gazeux, selon les formules présentées précédemment.

Si l'on se réfère à la figure 3, on note que le tube d'admission 3, dans lequel circule le mélange humide à une température de l'ordre de 110°C présente une commande séquentielle 28 qui permet une mesure successive des masses volumiques du mélange gazeux humide et du mélange gazeux sec. En effet, le dispositif présenté ne comporte qu'un seul capteur 2. En conséquence, l'unité de calcul 4 reçoit successivement la mesure de la masse volumique ($\ell_M$) puis ($\ell_{air}$). On obtient donc un calcul discontinu du titre molaire $Y_{eau}$ en vapeur d'eau et de la valeur de la teneur en eau (r) du mélange.

Il est à noter que la commande séquentielle 28 peut être commandée automatiquement par l'unité de calcul 4. Le mélange gazeux humide issu de l'enceinte dans laquelle on veut calculer la teneur en eau, circule donc soit directement vers le capteur 2, soit, dans une position particulière de la commande 28, tout d'abord en direction du cycle de séchage du mélange gazeux humide, composé successivement des appareils 24, 25 et 26, du type présenté précédemment. Devenu «sec», le mélange gazeux se dirige alors vers le capteur 2.

En résumé, le dispositif présenté à la figure 3 fonctionne de la même manière que le dispositif présenté à la figure 2, mis à part le calcul discontinu et successif des masses volumiques du mélange humide et du mélange sec.

Il est cependant à noter, que le dispositif présenté à la figure 3 permet la mesure précise de la teneur en eau. D'ailleurs, on aura noté qu'on a choisi le paramètre K comme une variable numérique, àgale à la masse volumique de l'air sec, dans la formule permettant le calcul du titre molaire $Y_{eau}$ en vapeur d'eau du mélange gazeux.

Enfin, de même que dans le cas où le dispositif est utilisé comme régulateur de la teneur en eau d'une enceinte (figure 1), les masses volumiques des gaz dépendent fortement de leurs température et de leur pression. Dans le procédé décrit conformément à l'invention, cette influence est limitée car on utilise des rapports de masse volumique. Une correction peut cependant être effectuée à l'aide de la valeur de la température T et de la pression P au niveau du capteur 2, 12. Cette correction peut être notamment utile lorsque ($\ell_M$) et ($\ell_{air}$) sont mesurés par l'intermédiaire de capteurs différents (2, 12) ou lorsque la mesure est effectuée alternativement et successivement.

Diverses variantes peuvent être apportées aux modes de réalisation illustrés et décrits.

En particulier, on peut noter que la mesure de la fréquence propre du tube dans lequel circule le fluide à mesurer et le calcul de la (des) masse(s) volumique(s) peuvent être réalisés par l'unité de calcul 4.

**Revendications**

1. Procédé pour la mesure de la valeur de la teneur en eau d'une atmosphère gazeuse, en particulier émanant d'enceintes de séchage ou de fours de cuisson, caractérisé en ce que:

— on mesure la masse volumique $\ell_M$ du mélange humide en phase gazeuse, fournie par un capteur du type densimètre,

— on calcule le titre molaire $Y_{eau}$ en vapeur d'eau du mélange gazeux par la formule:

$$Y_{eau} = \frac{K - \ell_M}{(K - \ell_M) - \dfrac{M_{eau}}{\ell_{eau}} \dfrac{P}{RT} (\ell_{eau} - \ell_M)}$$

dans laquelle

K est un paramètre,

$M_{eau}$ est la masse molaire de la vapeur d'eau et $\ell_{eau}$ est la masse volumique à la pression P et à la température T, de la vapeur d'eau,

R est la constante des gaz parfaits,

— et on en déduit la valeur du rapport de mélange r, qui est la forme habituelle employée pour exprimer la teneur en eau d'une atmosphère, par une relation numérique donnée.

2. Procédé selon la revendication 1, caractérisé en ce que l'on choisit comme valeur du paramètre K une constante numérique égale à la masse volumique du mélange sec $\ell_{air}$.

3. Procédé selon la revendication 1, caractérisé en ce que l'on choisit le paramètre K comme une variable numérique, égale à la masse volumique du mélange sec $\ell_{air}$ fournie par un capteur de type densimètre différent de celui permettant le calcul de la masse volumique du mélange humide $\ell_M$.

4. Procédé selon l'une quelconque des revendications précédentes, caractérisé en ce que la mesure de la masse volumique du mélange humide gazeux $\ell_M$ est effectuée de façon continue.

5. Procédé selon la revendication 1, caractérisé en ce que l'on choisit le paramètre K comme une variable numérique, égale à la masse volumique du mélange sec $\ell_{air}$, fournie de façon discontinue, en alternance avec la mesure de la masse volumique du mélange humide $\ell_M$, par ledit densimètre.

6. Procédé selon l'une quelconque des revendications précédentes, caractérisé en ce que l'on effectue les mesures de la (des) masse(s) volumique(s) à une température supérieure à 100°C, préférentiellement de l'ordre de 110°C, et à une pression sensiblement égale à la pression atmosphérique.

7. Dispositif pour la mise en œuvre du procédé de mesure de la teneur en eau d'une atmosphère gazeuse, caractérisé en ce qu'il comprend une chaîne d'acquisition (1) de la valeur recherchée, comportant au moins un capteur (2) du type densimètre, relié à un conduit d'admission (3) thermostaté du mélange humide gazeux et à un conduit d'évacuation (6) dudit mélange, auquel est couplée une unité de calcul (4) de ladite valeur recherchée à partir au moins de la mesure de la masse volumique humide $\ell_M$ dudit mélange fournie par ledit densimètre.

8. Dispositif selon la revendication 7, caractérisé en ce que ladite chaîne d'acquisition (1) comporte une commande (28) séquentielle de passage des mélanges gazeux, secs et humides, disposés sur le conduit d'admission (3) et permettant un calcul discontinu de la valeur recherchée.

9. Dispositif selon la revendication 7, caractérisé en ce qu'il comporte une autre chaîne d'acquisition (11) disposée en parallèle de la première, reliée audit conduit d'admission (3) et comportant un capteur (12) du type densimètre, qui permet la mesure de la masse volumique $\ell_{air}$ du mélange sec, auquel est couplée ladite unité de calcul (4) de la valeur recherchée à partir de la mesure des masses volumiques sèches et humides dudit mélange fournie par lesdits densimètres (2, 12).

**Patentansprüche**

1. Verfahren zur Messung des Wassergehalts einer gasförmigen Atmosphäre, insbesondere aus einer Trockenanlage oder einem Ofen, dadurch gekennzeichnet

— daß man die spezifische Masse $\ell_M$ der gasförmigen feuchten Mischung mißt, die von einem Dichtemeßfühler ermittelt wird,

— daß man den Molenbruch $Y_{eau}$ für den Wasserdampf der gasförmigen Mischung nach folgender Formel errechnet:

$$Y_{eau} = \frac{K - \ell_M}{(K - \ell_M) - \dfrac{M_{eau}}{\ell_{eau}} \dfrac{P}{RT} (\ell_{eau} - \ell_M)}$$

in der

K ein Parameter,

$M_{eau}$ die Molmasse des Wasserdampfes, $\ell_{eau}$ die spezifische Masse beim Druck P und bei der Temperatur T des Wasserdampfes und

R die ideale Gaskonstante sind,

— und daß man daraus den Wert des Mischungsverhältnisses r ableitet, der in der üblichen Form den Wassergehalt einer Atmosphäre durch ein Zahlenverhältnis angibt.

2. Verfahren nach Anspruch 1, dadurch gekennzeichnet, daß man als Wert des Parameters K eine numerische Konstante wählt, die gleich der spezifischen Masse $\ell_{air}$ der trockenen Mischung ist.

3. Verfahren nach Anspruch 1, dadurch gekennzeichnet, daß man den Parameter K als numerische Variable wählt, die gleich der spezifischen Masse $\ell_{air}$ der trockenen Mischung ist, welcher Wert von einem Dichtemeßfühler geliefert wird, bei dem es sich um einen anderen handelt als den, der die Berechnung der spezifischen Masse $\ell_M$ der feuchten Mischung ermöglicht.

4. Verfahren nach einem der vorhergehenden Ansprüche, dadurch gekennzeichnet, daß die Messung der spezifischen Masse $\ell_M$ der feuchten Gasmischung kontinuierlich erfolgt.

5. Verfahren nach Anspruch 1, dadurch gekennzeichnet, daß man den Parameter K als numerische Variable wählt, die gleich der spezifischen Masse $\ell_{air}$ der trockenen Mischung ist, welche Variable diskontinuierlich abwechselnd mit der Messung der spezifischen Masse $\ell_M$ der Feuchtmischung von dem Dichtemeßfühler geliefert wird.

6. Verfahren nach einem der vorhergehenden Ansprüche, dadurch gekennzeichnet, daß man die Messungen der spezifischen Masse(n) bei einer Temperatur über 100°C, vorzugsweise bei etwa 110°C durchführt und bei einem Druck, der im wesentlichen gleich dem atmosphärischen Druck ist.

7. Vorrichtung zum Durchführen des Verfahrens zur Messung des Wassergehalts einer gasförmigen Atmosphäre, dadurch gekennzeichnet, daß sie eine Meßwerterfassungskette (1) aufweist, die mindestens einen Dichtemeßfühler (2) enthält, der an eine temperaturgeregelte Zuleitung (3) für gasförmige feuchte Mischung und eine Ableitung (6) für diese Mischung angeschlossen ist, an welchen Fühler eine Rechnereinheit (4) angekoppelt ist zur Berechnung des gesuchten Meßwertes, mindestens ausgehend von der Messung der spezifischen feuchten Masse $\ell_M$ der genannten Mischung durch den Dichtemeßfühler.

8. Vorrichtung nach Anspruch 7, dadurch gekennzeichnet, daß die Meßwerterfassungskette (1) eine sequentielle Steuerung (28) enthält zum Durchleiten der trockenen und feuchten Gasmischungen, die über die Zuleitung (3) verfügbar sind, wobei eine diskontinuierliche Berechnung des gesuchten Wertes möglich ist.

9. Vorrichtung nach Anspruch 7, dadurch gekennzeichnet, daß sie eine weitere Erfassungskette (11) aufweist, die parallel zur ersten angeordnet und mit der Zuleitung (3) verbunden ist und einen Dichtemeßfühler (12) zur Messung der spezifischen Masse $\ell_{air}$ der trockenen Mischung enthält, an den die Berechnungseinheit (4) angeschlossen ist, zur Berechnung des gesuchten Wertes, ausgehend von der Messung der spezifischen trockenen und feuchten Massen der Mischung, welche Messung von den Dichtemeßfühlern durchgeführt wird.

**Claims**

1. A methof of measuring the level of the water content in a gaseous atmosphere, particularly emanating from drying enclosures or cooking ovens, characterised in that:

— the volumetric mass $\ell_M$ of the humid mixture in gaseous phase is measured, being provided by a densimeter or hydrometer type of sensor,

— the molar titre $Y_{water}$ in water vapour of the gaseous mixture is calulated by the formula:

$$Y_{water} = \frac{K - \ell_M}{(K - \ell_M) - \dfrac{M_{water}}{\ell_{water}} \dfrac{P}{RT} (\ell_{water} - \ell_M)}$$

in which

K is a parameter,

$M_{water}$ is the molar mass of water vapour and $\ell_{water}$ is the volumetric mass at the pressure P and at temperature T of the water vapour,

R is the constant of perfect gases,

— and the value of the ratio of the mixture r, which is the conventional form used to express the water content of an atmosphere is deduced by a given numerical relationship.

2. A method according to Claim 1, characterised in that as a value of the parameter K a numerical constant is chosen which is equal to the volumetric mass of the dry mixture $\ell_{air}$.

3. A method according to Claim 1, characterised in that the parameter K is chosen as a numerical variable equal to the volumetric mass of the dry mixture $\ell_{air}$ supplied by a densimeter or hydrometer type of sensor which is different from that which permits calculation of the volumetric mass of the humid mixture $\ell_M$.

4. A method according to any one of the preceding Claims, characterised in that the volumetric mass of the gaseous humid mixture $\ell_M$ is measured continuously.

5. A method according to Claim 1, characterised in that the parameter K is chosen as a numerical variable equal to the volumetric mass of the dry mixture $\ell_{air}$ provided discontinuously and alternately with measurement of the volumetric mass of the humid mixture $\ell_M$ by the said densimeter.

6. A method according to any one of the preceding Claims, characterised in that the volumetric mass(es) is/are measured at a temperature in excess of 100°C and preferably around 110°C and at a pressure which is substantially equal to atmospheric pressure.

7. An apparatus for carrying out the method of measuring the water content of as gaseous atmosphere, characterised in that it comprises a system (1) for detecting the desired value, comprising at leat one sensor (2) of the densimeter type connected to a thermostatically controlled duct (3) for the intake of gaseous humid mixture and a duct (6) for evacuating the said mixture, to which is coupled a unit (4) for calculating the said desired value on a basis of at least the measurement of the humid volumetric mass $\ell_M$ of the said mixture, provided by the said densimeter.

8. An apparatus according to Claim 7, characterised in that the said system (1) comprises a sequential control (28) governing the passage of gaseous dry and humid mixtures, disposed on the intake duct (3) and permitting of intermittent calculation of the desired value.

9. An apparatus according to Claim 7, characterised in that it comprises another acquisition system (11) disposed in parallel with the first, connected to the said intake duct (3) and comprising a pickup or sensor (12) of the densimeter type, which permits of measurement of the volumetric mass $\ell_{air}$ of the dry mixture, to which is coupled the said unit (4) for calculating the desired value on the basis of a measurement of the dry and humid volumetric masses of the said mixture supplied by the said densimeter (2, 12).

FIG-1

FIG-3

FIG-2

EP 0 213 025 B1

FIG-4